# EUROPEAN PATENT SPECIFICATION

(11) **EP 1 050 215 B1**
(45) Date of publication and mention of the grant of the patent: **13.10.2004**
(21) Application number: 00201637.6
(22) Date of filing: 05.05.2000
(51) Int. Cl.: A23G 1/18, A23G 1/04

(54) **A tempering apparatus**
Temperiereinrichtung
Appareil de conditionnement

(30) Priority: 05.05.1999 EP 99201399
(43) Date of publication of application: 08.11.2000
(73) Proprietor: AASTED-MIKROVERK APS, 3520 Farum (DK)
(72) Inventor: Haslund, Henning, 4632 Bjaeverskov (DK)
(74) Representative: Heiden, Finn

(56) References cited:
- EP-A- 0 289 849
- EP-A- 0 806 149
- EP-A- 0 872 187
- CH-A- 321 852
- US-A- 1 375 210
- US-A- 2 677 942
- US-A- 4 279 295
- US-A- 4 648 315

## Description

The invention concerns an apparatus for continuous tempering of a cacao butter containing or other fat-containing, chocolate-like mass, comprising a primary cooling section, a subsequent secondary cooling section in which crystals are created in the mass, and a final re-heating section.

For many years, tempering apparatuses have been used extensively for treatment of a great variety of chocolate-like masses. Before tempering, the chocolate or like mass is warmed up to around 40-60°C. After tempering, the mass typically has a temperature of around 29-33°C, whereafter it is being used for many purposes, such as being filled in moulds, deposited on top of other articles, etc.

The aim of the tempering process is briefly spoken, to create a mass with a portion and a type of crystals, that satisfies, that the chocolate-like mass for sure will solidify to a state, which results in a "high" quality article. To the skilled person, a "high quality" article brings along a glossy surface, long time storage capacity without diffusion of fat content to the surface, crispy break, and of course good taste as well. Experience has gained the knowledge to the skilled person, that such high quality is heavily dependent upon the type of crystals created in the mass during tempering.

Extensive scientific research has since long provided the teaching, that of the several available crystal forms, which may be performed during tempering of a chocolate-like mass, it is the stable (β-crystals only, which for sure provides high quality chocolate-like mass. Of the different β-crystals, it is particularly advantageous to obtain the most stable crystals, such as β-5 crystals.

### Prior art

Mixing and stirring elements are typically provided as propellers with two opposite blades. The blades may be provided with elevations or recesses on one or both sides. These elevations or recesses may serve three purposes. They serve to mix and stir the chocolate-like mass to make it homogeneous. They may serve to direct the liquid chocolate like mass in direction either towards the periphery or the centre of the mass chambers. They may also serve to provide shear-force to the mass. The shear force is the product of the viscosity of the mass and the shear gradient. The shear gradient is the speed difference between the two opposing surfaces divided by the height of the clearance between them. The unit of the shear gradient is sec⁻¹.

By clearance is meant gaps or slits between the mixing element and the opposed surface through which gaps or slits the chocolate mass flow.

It has been determined that a shear gradient above 50 sec⁻¹ should be provided in order to obtain a satisfactory shear force. The shear force exerted on the chocolate-like mass aids in the formation of stable β-5 crystals, more specifically by transforming the β-4 crystals into β-5 crystals. This transformation can also be obtained by adjusting of the temperature, but through the shear force, the same effect may be obtained.

Mixing and stirring elements that are essentially disc-shaped are also known in the prior art. The known type of disc-shaped mixing and stirring elements allow for the passage of chocolate-like mass at the periphery either through openings in the elements or simply because of the presence of a clearance between the periphery of the elements and the interior diameter of the cylindrical tempering column.

From US 4,648,315 is known an apparatus for tempering chocolate, in which two disc-shaped elements are arranged in the mass chambers for mixing and stirring the mass as well as leading the mass through the apparatus. Each of the two disc-shaped elements are having on one side thereof a plurality of helical scraping parts and on the opposite side thereof a plurality of substantially radially extending mixing blades. Both of the disc-shaped elements are having a constant thickness and the cooling surfaces opposite to the disc-shaped elements is horizontal. The matter is that the height of the clearance between the elements and the opposed surfaces is constant with an increasing radius of the element. Accordingly, the shear gradient between the disc-shaped elements and the cooling surface increases extensively from the centre of the disc-shaped element towards the periphery due to the increase in velocity of the disc at larger radius.

Known types of tempering apparatuses furthermore disclose disc-shaped elements arranged in the mass chamber for mixing and leading the mass through the apparatus. The disc-shaped elements disclose a thickness which tapers from the periphery to the centre of the element and the cooling surfaces opposite to the elements is horizontal. Accordingly, the temper exhibits larger height of the clearance between the disc-shaped element and the cooling surface at the centre than at the periphery. Thereby the height of the clearance will decrease with increasing radius of the disc-shaped element and consequently the shear gradient will increase extensively with increasing radius.

DE 19854204.6 discloses also disc-shaped elements. The thickness of these elements is constant over the entire extent and the cooling surfaces is horizontal. Thus, the height of the clearance between the element and the opposed surface is constant. Accordingly, the shear gradient between the element and the surface will vary extensively.

Common for all the known tempering apparatuses having mixing and stirring elements in the form of propellers or discs are that the shear gradient between the elements and the cooling surfaces increases extensively with increasing radius. The chocolate mass is exposed to a very low shear-force in the area around the centre of the discs and is exposed for extremely high shear-force in the area of the periphery. The consequence is, that the possible shear conditions influencing the mass varies over all of the surfaces, whereby the creation of the stable β-5 crystals could not be predetermined to an exact and constant amount.

### Core of the invention

It is the purpose of the present invention to provide a tempering unit with higher efficiency than known by the prior art and especially to provide a unit in which the contribution of the shear-force to the mass can be controlled to a more constant level than by the prior art.

This object is solved by providing an apparatus having a cylindrical tempering column comprising a cooling stage and a subsequent reheating stage for continuous tempering of a fat-containing, chocolate-like mass pumped therethrough, which tempering column further comprise a plurality of interconnected mass chambers, which are separated by intermediary heat exchange chambers adapted to absorb heat from the mass chambers or to submit heat to the mass chambers during flow of cooling media through the cooling stage or flow of heating media through the reheating stage, respectively, and which mass chambers further comprise mixing and stirring elements, which are rotated by the action of a common, central drive shaft arranged in the column, said mixing and stirring elements comprise a disc shaped part, further comprising clearances between the disc shaped parts and surfaces of the heat exchange chambers wherein, the height of the clearances increases with increasing radius of the disc shaped parts.

The shear gradient thereby reaches a more constant level than by the prior art and consequently the tempered chocolate constitutes of a higher number as well as a more constant amount of stable β5 crystals than before.

Hereby is obtained, that the finished tempered chocolate mass has a fine crystal structure of stable β-5 crystals, which results in "high" quality articles having a glossy surface, long time storage capacity without diffusion of fat content to the surface, crispy break, and of course good taste as well.

Furthermore, it has been determined that non-active zones of the area wiped by the stirring elements is transformed into active zones for shearing.

The clearance may be the whole or parts of the gap or slit between a disc shaped part and the opposed surface or surfaces.

During operation of the apparatus the skilled person adjusts the rotation of the disc shaped parts in order to provide the required constant shear-force depending on the type of mass. By the present invention it is therefore possible for the skilled person to exactly control the shear-force provided to the mass, and thereby he is given the opportunity to control the result of the finished tempered mass to a much higher extent than known before.

The inventive solution is especially efficient when a clearance is arranged in the mass chamber of the temperer where the (β crystals are created, the so-called zone of crystallisation where the cooling surface temperature preferably is below 18 °C.

By an especially expedient embodiment the clearance extents the substantial part of the extension from the centre to the periphery of the disc shaped part.

Thereby the substantial area of the disc-shaped element gives a constant contribution to the shear force in the mass and the shear gradient may thereby be predetermined. By the substantial part is preferably meant more than 50 % of the surface area of the disc shaped part.

A further advantage is that the cooling medium temperature in the crystallisation area of the apparatus may be higher than the known apparatuses and thereby a more energy-conserving and efficient apparatus is obtained.

By an especially expedient embodiment *C*₂ = *r*₂ × *C*₁/*r*₁ , and C is the width or height of the clearance and r is the radius at that width.

Consequently, the shear gradient obtained by the clearance is essentially constant all over the clearance.

By essentially constant is meant that the main part of the clearance of the disc shaped part provides a constant shear-force to the mass, this does not exclude that the disc shaped part may be arranged with other minor parts, for instance mixing blades and elevations, which in it self provides a contributing shear-force to the mass between a surface thereof and the opposing cooling surface.

Thereby the constant shear gradient from the centre to periphery of the disc-shaped part secures that a large and constant amount of β-4 crystals in the mass are transformed into the stable β-5 crystals.

Especially could the height of the clearance be doubled at the double radius.

According to a further preferred embodiment of the invention the thickness of the disc shaped part tapers towards the periphery, and the surface of the heat exchange chamber opposite the disc shaped part may be substantially planar and horizontal. Hereby is obtained, that an essentially constant shear gradient can be altered with regard to the requirements of the amount of mass flow or/and chocolate type by altering the taper of the disc shaped part. This embodiment also makes available the opportunity of altering an existent tempering apparatus without substantial construction-wise changes.

In another embodiment according to the invention may the thickness of the disc shaped part be substantially constant and the surface of the heat exchange chamber opposite the disc shaped part in direction towards the periphery be inclined away from the disc shaped part.

Preferably according to the invention may the shear gradient be above 50 sec⁻¹ for the substantially part of the extent from the centre to the periphery of the disc shaped part. Hereby is secured that the entire area of the disc shaped part is active in providing shear-force to the mass.

According to an especially preferred embodiment the mixing and stirring elements extend essentially all the way to the internal wall of the cylindrical tempering column. Alternatively, the peripheral part of said mixing and stirring elements is essentially free from holes or incisions for the flow of mass. By this embodiment it is obtained that the peripheral part of the stirring element, which has the largest speed difference, may be used for exerting shear force, instead of providing flow from one side of the element to the other.

According to another embodiment, holes for the flow of mass are provided in the mixing and stirring elements. These holes may be provided in an area adjacent the central drive shaft. The holes thereby form flow of mass in the centre of the disc-shaped stirring element. This part of the element, which will typically not add to the shear force, is used for another purpose, i.e. the flow of mass from one side of the element to the other.

### Detailed description

The invention will be explained more fully below with reference to particularly preferred embodiments as well as the drawing, in which
Figure 1 shows schematically a vertical section of the tempering column of a tempering apparatus.
Figure 2 provides a schematic view of one of the sides of the stirring and mixing element.
Figure 3 provides a schematic cross section of a tapered stirring and mixing element.
Figure 4 shows schematically a sectional view of a part of the tempering column shown in Figure 1.

All the figures are highly schematic and not necessarily to scale, and they show only parts which are necessary in order to elucidate the invention, other parts being omitted or merely suggested.

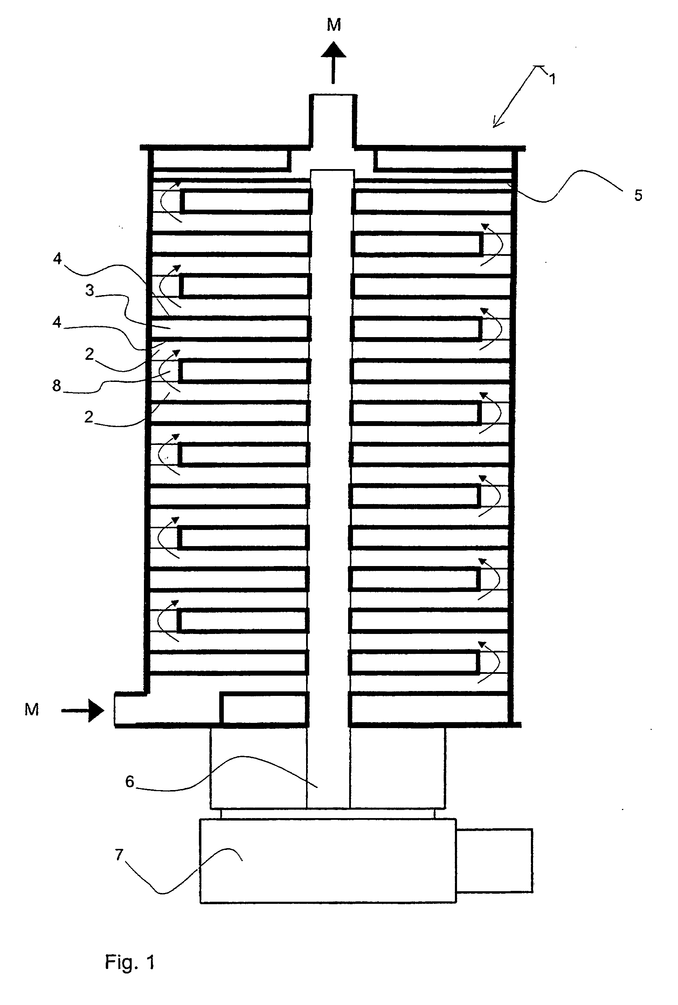

The tempering column 1 shown in fig. 1 has a circular vertical section, and comprises a plurality of alternating mass chambers 2 and intermediary medium chambers 3 for cooling or heating medium, which chambers 2, 3 are separated by intermediary, disk-shaped walls 4. In each mass chamber 2 are preferably arranged a mixing and stirring means 5, whereof only one is shown for clarity, and which mixing and stirring means 5 are rotated by means of a central, vertical shaft 6 driven by a motor 7.

By means of for instance a pump, which is not shown, the mass is forced to flow through the tempering column 1 with a general vertical direction M, which by the disclosed embodiment is from the bottom to the top. In each mass chamber 2, the mass is subjected to a stirring means 5, as well as to cooling or a heating effected to the mass by the cooling or heating medium in question flowing through the adjacent chamber 3. The mass chambers are interconnected by openings 8, which preferably are arranged at the periphery of the column 1.

Such a tempering column has been known for more than half a century, and is today the most widely used heat exchange means for tempering of chocolate-like mass. It is furthermore well-known, that the best performance of such a tempering column is achieved, when the cooling or heating medium flow continuously and turbulent through the chambers and when the stirring means 5 exerts shearing forces as well as a force-full stirring to the mass.

During operation, molten chocolate-like mass (M) is pumped into the tempering unit at the bottom (indicated by an arrow). The chocolate-like mass then passes through a series of interconnected mass chambers 3. When the chocolate-like mass enters the first mass chamber 2, it is subjected to shear force, it is mixed by the disc-shaped rotating stirring and mixing element 5 and it is moved to the centre of the disc where the mass flows through openings 9 to the part of the mass chamber above the element. In the compartment above the element 5, the mass is further subjected to shear force, mixed, and stirred through the rotation of the element. The mass then moves on to the next mass chamber by passing through opening 8 to the successive mass chamber where the mass passes through openings in the element as in the first chamber. In this way, the mass is subjected to shearing, mixing, and stirring in a meander-like pattern through the tempering column. In the mass chambers the mass is moved in a helical pattern towards the centre below the mixing and stirring elements 5, and towards the periphery with the openings 8 above the elements.

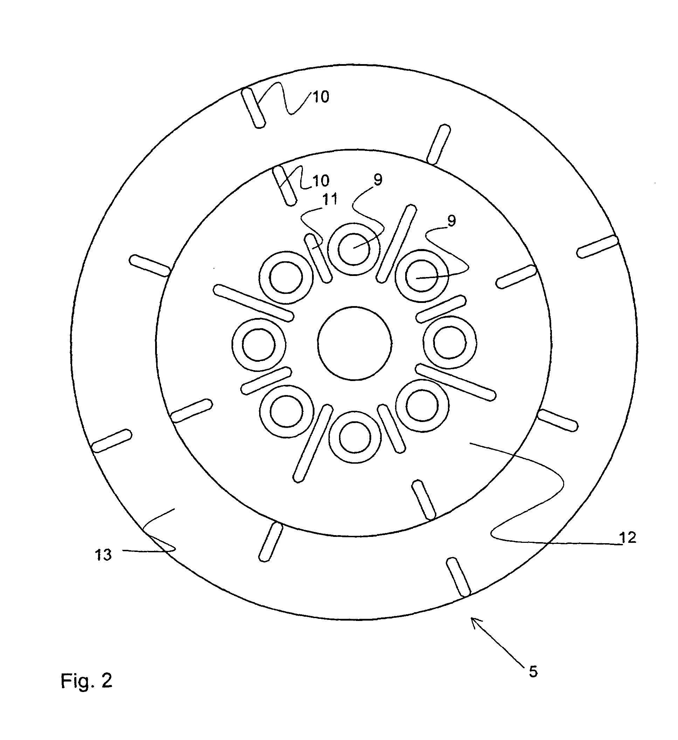

One embodiment of the inventive stirring and mixing element is disclosed in figure 2. The element essentially has the shape of a disc. Important is that the element has a size so it fits exactly into the cylindrical column. Thereby the only passage of chocolate-like mass from the lower to the upper side is through openings 9 in the element 5. The invention does not exclude the possibility that some chocolate may escape through the small tolerance between the internal wall of the tempering column and the stirring element.

Preferably, the openings are provided in the area close to the centre of the stirring element. Thereby is obtained that the mass is subjected to stirring and shearing in a large part of the mass chamber, since the mass has to pass from the peripheral opening 8 below the stirring element all the way to the centre of the stirring element before it can actually pass the element.

The number as well as the size and shape of the openings may vary within the inventive idea as long as they allow for passage of the chocolate. Preferably, there is an equal number of openings placed symmetrically around the driving shaft. The cross sectional area of the openings together with the pump capacity determines the speed at which the chocolate-like mass can be passed though the tempering column.

By providing the passage for the chocolate-like mass adjacent the centre of a disc-shaped stirring and mixing element an increased efficiency is obtained. Normally, the central part of the mixing element is less efficient in providing mixing and shearing force to the chocolate-like mass, since the speed is lower than at the periphery. By thus using the central zone for passage of chocolate-like mass rather than for mixing, an improved mixing and shearing efficiency is obtained. The occurrence of zones of stationary or almost stationary mass is more or less avoided according to the invention.

The edge of the openings may be provided with a taper to facilitate the passage of the chocolate-like mass. The taper may also increase the speed during passage, which further adds to the shearing force applied to the mass.

The mixing element is furthermore provided with small elevations 10 or mixing blades 11. Preferably, these elevations and blades are elongate and placed along the radius of the mixing element. The mixing blades may be of identical size or may vary in size within the invention. Similarly, the elevations 10 may also vary in size or be of identical size. One purpose of these elevations and blades is to wipe the entire surface of the mass chamber 2, so that no area is left undisturbed by the mixing element. A further purpose is to provide shear force to the chocolate-like mass. The elevations and mixing blades may typically constitute from 1 to 15 % of the surface area wiped by the stirring element, preferably from 2 to 10 %, more preferably from 4-6 %.

The invention does not exclude the possibility that the elevations and mixing blades are given a shape such that they transport the chocolate-like mass towards the centre below the mixing element and towards the periphery above the mixing element. Such an effect could be obtained by providing the mixing blades with a convex, curved extension in direction outwardly towards the peripheral cylinder wall below the element and an opposite curvature on the upper side.

The shear force is determined by the product of the viscosity of the mass and the shear gradient. The viscosity of the mass is determined by the nature of the mass and the degree of tempering. The shear gradient is the speed gradient between the two opposing surfaces divided by the distance or height between them.

The unit of the shear gradient is sec⁻¹.

It has been determined that a shear gradient above 50 sec⁻¹ should be provided in order to obtain a satisfactory shear force. The speed gradient varies with the radius of the rotating mixing element 11, being lower closer to the centre and higher at the periphery.

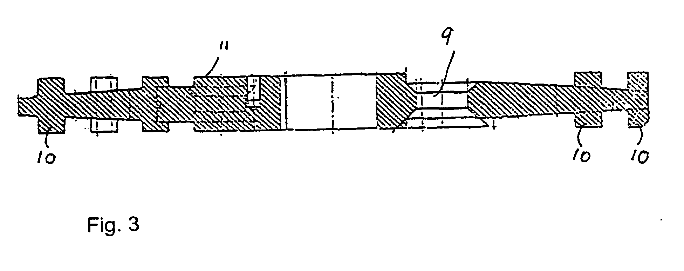

According to an embodiment of the invention disclosed schematically in figure 3, the mixing element tapers towards the periphery. The taper could be linear.

The effect of increasing the active surface that exerts shearing force on the mass is to increase the overall efficiency of the tempering apparatus. An increased efficiency is also obtained by arranging the openings in the disc-shaped stirring element adjacent the central drive shaft, whereby this zone, which does not add to the active shearing is used for the flow of mass through the tempering unit. Thereby a higher amount of chocolate-like mass can be tempered per time unit than by the prior art. It has been determined experimentally that at least a 25 % increase in efficiency can be obtained by the present invention.

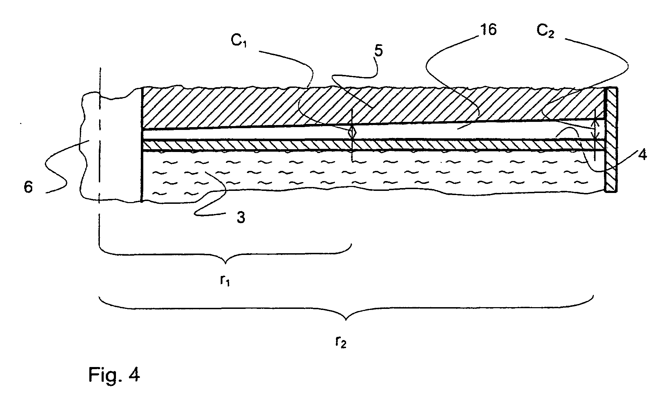

In figure 4 is shown a part of the disc shaped part 5 which tapers from the centre towards the periphery. Between the disc shaped part 5 and the intermediary wall 4 is a clearance 16 shown, the height of which clearance 16 increase with increasing radius of the disc shaped part 5. The disc shaped part is in this sectional view shown without any mixing blades and elevations. In this embodiment is shown two different height of clearings, a first clearing height C₁ situated at a radius r₁ of the disc shaped part 5 and a second clearing height C₂ situated at a radius r₂. Especially the matter is that *C*₂ = *r*₂ × *C*₁ /*r*₁ .

In an apparatus according to the invention the disc shaped parts are having a radius on 0.244 m. The rotation of the disc shaped part is approximately 32 rounds/min. Accordingly, the speed of the disc shaped part at the periphery is v=(2πr)xrotation=49.06 m/min = 0.82 m/s. The height of the clearance between the disc shaped part and the intermediary wall at the periphery is set to 0.016 m, consequently the shear gradient here is 51 sec⁻¹, i.e. above the minimum requirement. At half the radius of the element the speed is 0.41 m/s and the clearance is 0.008, hereby the shear gradient is 51 sec⁻¹. According to the inventive solution a doubling of the radius gives a doubling of the clearance height. As the speed of the disc shaped part increases with increasing radius of the disc shaped part the clearance height between the part and the wall increases preferably linear from the centre towards the periphery of the part. Hereby the substantially entire area of the disc shaped part contributes with shear-force to the mass.

## Claims

1. An apparatus (1) having a cylindrical tempering column for continuous tempering of cacao butter containing or other fat-containing, chocolate-like mass pumped therethrough, which tempering column further comprises a plurality of interconnected mass chambers (2), which are separated by intermediary heat exchange chambers (3), and which mass chambers (2) further comprise mixing and stirring elements (5), which are rotated by the action of a common, central drive shaft (6) arranged in the column, said mixing and stirring elements (5) comprise a disc shaped part **characterized in** further comprising clearances between the disc shaped parts (5) and surfaces of the heat exchange chambers (3) wherein, the height of the clearances increases with increasing radius of the disc shaped parts.

2. Apparatus according to claim 1, wherein the clearance extents the substantial part of the extension from the centre to the periphery of the disc shaped part (5).

3. Apparatus according to claim 1, wherein *C*₂ = *r*₂ × *C*₁ /*r*₁ , and C is the width or height of the clearance and r is the radius at that width.

4. Apparatus according to claim 1, wherein the height of the clearance is doubled at the double radius.

5. Apparatus according to claim 1, wherein the thickness of the disc shaped part (5) tapers towards the periphery.

6. Apparatus according to claim 2 wherein, the surface of the heat exchange chamber (3) opposite the disc shaped part (5) is substantially planar and horizontal.

7. Apparatus according to claim 1 wherein, the thickness of the disc shaped part (5) is substantially constant and the surface of the heat exchange chamber (3) opposite the disc shaped part (3) in direction towards the periphery is inclined away from the disc shaped part.

8. Apparatus according to claim 1, wherein the shear gradient is above 50 sec⁻¹ for the substantially part of the extent from the centre to the periphery of the disc shaped part (5).

9. Apparatus according to claim 1, wherein said disc shaped parts (5) extend essentially all the way to the internal wall of the cylindrical tempering column.

10. Apparatus according the claim 1, wherein the both sides of the disc shaped part comprise identical mixing blades (11) and elevations (10).

11. Apparatus according to claim 1, wherein the clearance is arranged in the mass chamber of the temperer where the β crystals are created, or in a mass chamber following thereafter.

## Patentansprüche

1. Vorrichtung (1) die eine zylindrische Temperiersäule zur kontinuierlichen Temperierung einer schokoladenähnlichen Masse mit Bestandteilen von Kakaobutter oder anderen Typen Fett umfaßt, die dadurch gepumpt wird, welche Temperiersäule ferner eine große Anzahl von miteinander verbundenen Massenkammem (2) umfasst, die von zwischenliegenden Wärmeaustauschkammern (3) getrennt sind, und welche Massenkammern (2) ferner Misch- und Rührelemente (5) umfassen, die durch die Aktion einer gemeinsamen, zentralen Antriebswelle (6), in der Säule angeordnet, rotiert werden, welche Misch- und Rührelemente (5) einen scheibenförmigen Teil umfassen, und ferner Freigang zwischen den scheibenförmigen Teilen (5) und den Flächen der Wärmetauschkammern (3) umfassen, worin die Freigangshöhe durch erhöhten Radius der scheibenförmigen Teile erhöht ist.

2. Vorrichtung gemäß Anspruch 1, worin der Freigang den maßgeblichen Teil der Erstreckung vom Zentrum bis zur Peripherie vom scheibenförmingen Teil (5) erstreckt.

3. Vorrichtung gemäß Anspruch 1, worin C2 = r₂ x C₁ / r₁, und C die Breite der Freigangshöhe ist, und r der Radius bei dieser Breite ist.

4. Vorrichtung gemäß Anspruch 1, worin die Freigangshöhe beim verdoppelten Radius verdopppelt ist.

5. Vorrichtung gemäß Anspruch 1, worin die Dicke des scheibenförmigen Teils (5) in Richtung der Peripherie zuspitzt.

6. Vorrichtung gemäß Anspruch 2, worin die Oberfläche der Wärmetauschkammer (3) gegenüber dem scheibenförmigen Teil (5) maßgeblich planar und horizontal ist.

7. Vorrichtung gemäß Anspruch 1, worin die Dicke des scheibenförmigen Teils (5) maßgeblich konstant ist, und die Oberfläche der Wärmetauchkammer (3) gegenüber dem scheibenförmigen Teil (3) in Richtung der Peripherie von dem scheibenförmigen Teil weg schrägabgefallen ist.

8. Vorrichtung gemäß Anspruch 1, worin der Schergradient des maßgeblichen Teils von der Erstreckung vom Zentrum bis zur Peripherie vom scheibenförmigen Teil (5) über 50 sec⁻¹ ist.

9. Vorrichtung gemäß Anspruch 1, worin die genannten scheibenförmigen Teile (5) maßgeblich die ganze Strecke bis zur inneren Wand der zylindrischen Temperiersäule erstreckt.

10. Vorrichtung gemäß Anspruch 1, worin die beiden Seiten von dem scheibenförmigen Teil identische Mischblätter (11) und Erhebungen (10) umfassen.

11. Vorrichtung gemäß Anspruch 1, worin der Freigang in der Massenkammer der Temperiervorrichtung, wo die β-Kristalle gebildet sind oder in der nachfolgenden Massenkammer, angeordnet ist.

## Revendications

1. Dispositif (1) ayant une colonne de tempérage cylindrique pour le tempérage continu d'une masse de type chocolat de matière beurre de cacao ou de matière grasse qui est pompée à travers, laquelle colonne de tempérage comprend de plus un grand nombre de chambres de masse (2) reliées entre elles qui sont séparées par des chambres d'échangeur de chaleur intermédiaires (3), et lesquelles chambres de masse (2) comprennent de plus des éléments mélangeur/agitateur (5), qui sont tournées par l'action d'un arbre commun central (6) placé dans la colonne, lesquels éléments mélangeur/agitateur (5) comprennent de plus une partie en forme de disque, et qui comprennent de plus des jeux entre les parties en forme de disque (5) et les surfaces des chambres d'échangeur de chaleur (3), ou l'hauteur des jeux augmente du rayon augmenté des parties en forme de disque.

2. Dispositif selon la revendication 1, dans lequel le jeu s'étend la majeure partie de l'étendue du centre jusqu'à la périphérie de la partie en forme de disque (5).

3. Dispositif selon la revendication 1, dans lequel C₂ = r₂ x C₁/r₁, et C est la largeur de la hauteur de jeu, et r est le rayon à cette largeur.

4. Dispositif selon la revendication 1, dans lequel la hauteur de jeu est redoublée au rayon redoublé.

5. Dispositif selon la revendication 1, dans lequel l'épaisseur de la partie en forme de disque (5) aiguise vers la périphérie.

6. Dispositif selon la revendication 2, dans lequel la surface de la chambre d'échangeur de chaleur (3) vis-à-vis la partie en forme de disque (5) est essentiellement plane et horizontale.

7. Dispositif selon la revendication 1, dans lequel l'épaisseur de la partie en forme de disque (5) est essentiellement constante, et la surface de la chambre d'échangeur de chaleur (3) vis-à-vis la partie en forme de disque (3) en direction vers la périphérie penche en dehors de la partie en forme de disque.

8. Dispositif selon la revendication 1, dans lequel le gradient de cisaillement est plus de 50 sec⁻¹ en ce qui concerne la partie essentielle de l'extension de la centre jusqu'à la périphérie de la partie en forme de disque (5).

9. Dispositif selon la revendication 1, dans lequel les parties en forme de disque (5) s'étendent fondamentalement tout au long jusqu'à la parois interne de la colonne de tempérage cylindrique.

10. Dispositif selon la revendication 1, dans lequel les deux côtés de la partie en forme de disque comprennent des ailes mélangeur (11) et d'élévations identiques (10).

11. Dispositif selon la revendication 1, dans lequel le jeu est arrangé dans la chambre de masse de la tempéreuse où les cristaux-β sont créés, ou dans une chambre de masse subséquente.
